(19) Europäisches Patentamt
European Patent Office
Office européen des brevets

(11) **EP 4 503 516 A1**

(12) **DEMANDE DE BREVET EUROPEEN**

(43) Date de publication:
**05.02.2025 Bulletin 2025/06**

(21) Numéro de dépôt: **24187836.2**

(22) Date de dépôt: **10.07.2024**

(51) Classification Internationale des Brevets (IPC):
*H04L 9/40* (2022.01)     *G06Q 20/40* (2012.01)
*H04W 12/08* (2021.01)     *G06F 21/40* (2013.01)

(52) Classification Coopérative des Brevets (CPC):
**H04L 63/0876; G06F 21/40; H04L 63/102;
H04L 63/107; H04W 12/08;** G06Q 20/40;
G06Q 20/4016

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **31.07.2023 FR 2308271**

(71) Demandeur: **Orange
92130 Issy-les-Moulineaux (FR)**

(72) Inventeurs:
• **HEMERY, Baptiste
92326 Châtillon (FR)**
• **JEANNE, Fabrice
92326 Châtillon (FR)**

(74) Mandataire: **Vidon Brevets & Stratégie
16B, rue de Jouanet
35700 Rennes (FR)**

(54) **PROCÉDÉ D'AIDE À LA DÉCISION POUR UN UTILISATEUR D'UN TERMINAL D'ACCEPTER OU NON UNE COMMUNICATION, SYSTÈME D'AIDE À LA DÉCISION ET PROGRAMME D'ORDINATEUR CORRESPONDANTS**

(57) L'invention se rapporte à un procédé d'aide à la décision pour un utilisateur (2) d'un premier terminal (20) recevant une requête de communication ($Req_{com}$) provenant d'un deuxième terminal (10), l'utilisateur (1) du deuxième terminal (10) étant non connu par ledit utilisateur du premier terminal (20). Le procédé comprend une détermination d'un score de confiance de l'utilisateur du deuxième terminal (10) et d'un écart de confiance, ledit écart de confiance apportant une information sur une fiabilité dudit score de confiance. Le score de confiance et l'écart de confiance sont déterminés à partir d'une liste comprenant au moins un utilisateur d'un troisième terminal auquel le deuxième terminal a déjà transmis une requête de communication, le au moins un utilisateur du troisième terminal appartenant à au moins une communauté d'utilisateurs.

[Fig. 1]

## Description

### Domaine technique

La présente invention se rapporte à la sécurisation des échanges entre terminaux de communication (par exemple téléphone mobile, tablette, ordinateur, etc.) au sein d'un réseau de communication ou de transactions, par exemple un réseau IP (pour « Internet Protocol » en anglais), ou USSD (pour « Unstructured Supplementary Service Data » en anglais et service supplémentaire pour données non structurées en français).

Par « échange », on entend tout type de mise en relation entre des utilisateurs de terminaux de communication. En d'autres termes, l'invention est applicable à tous contextes mettant en oeuvre des télécommunications ou des transactions financières, entrantes ou sortantes, pour lesquelles il est possible d'établir une relation sociale entre des utilisateurs. De tels échanges sont par exemple : des paiements mobiles, des virements bancaires, des télécommunications telles que des appels, des SMS (pour « Short Message Service » en anglais), des vidéo-conférences, etc.

### Arrière-plan technique

Le réseau IP est le support d'une multitude de services et applications. Certains opérateurs de télécommunications utilisent notamment ce réseau pour soutenir leurs différentes offres de service.

En effet, de nombreuses offres reposent sur le principe d'une mise en relation de deux utilisateurs de terminaux connectés à Internet dans le but d'établir une communication ou une transaction financière entre ces utilisateurs.

Ces services et applications permettent d'établir des échanges entre utilisateurs. Ces échanges sont des occasions pour des fraudeurs de tenter de détourner les échanges en leur faveur en entrant en contact avec leurs cibles, de manière fortuite (par exemple en envoyant des messages, en réalisant des appels à large diffusion etc.) ou en se faisant passer pour une relation de confiance (par exemple lors d'une tentative d'arnaque ciblée, de détournement ou d'usurpation d'identité, etc.).

Certains utilisateurs peuvent également commettre une erreur et involontairement initier un échange vers un contact non désiré (par exemple une erreur de saisie ou un lien frauduleux). Il est donc important pour la sécurité de l'utilisateur de l'avertir en cas de détection d'un échange jugé à risque et le protéger en empêchant, si nécessaire, une telle mise en relation.

Plusieurs solutions existent déjà pour protéger ces utilisateurs, avec plus ou moins d'efficacité. La plus simple est l'utilisation de listes « noires » ou « blanches » représentant un ensemble d'identifiants (comme par exemple : des numéros de téléphone, des numéros WhatsApp, MSISDN (pour « Mobile Sation International Subscriber Directory Number » en anglais), IBAN ( pour « International Bank Account Number » en anglais), etc.) à risque, ou de confiance, permettant de contrôler rapidement la présence d'un identifiant sur cette liste et d'agir en conséquence. Ces listes existent mais doivent être régulièrement mises à jour, elles ne sont donc pas exhaustives.

Par exemple, dans le contexte du paiement mobile, certains fraudeurs changent régulièrement de numéro de téléphone, rendant quasi impossibles le maintien et la diffusion d'une liste « noire » à jour. Ainsi, l'utilisation d'une telle liste est donc souvent limitée à des sources de fraude clairement identifiées à l'échelle mondiale ou du pays, par exemple à l'aide du système de liste AML/CFT (pour « Anti Money Laundering/Countering the Financing of Terrorism » en anglais) c'est à dire pour la lutte contre le blanchiment d'argent et le financement du terrorisme en français. Ces listes sont gérées à l'échelle nationale ou internationale par des entreprises, des institutions (inter)gouvernementales ou de la finance (par exemple l'organisme intergouvernemental de lutte contre le blanchiment d'argent et le financement du terrorisme ou FATF (pour « Financial Action Task Force » en anglais c'est-à-dire pour groupe d'action financière en français) mais aussi par les opérateurs de services eux-mêmes qui cherchent à identifier les utilisateurs fraudeurs).

La mise en place d'une liste de confiance ou liste « blanche » est une solution efficace mais à l'utilisation relativement limitée : elle s'appuie généralement sur la constitution d'une liste de contacts récurrents (par exemple issus du carnet d'adresses ou d'appels) ou elle est construite localement après vérification et validation de son contenu. Ces listes sont souvent personnelles, relativement réduites en nombre de contacts (par exemple réduites aux contacts de l'utilisateur), non exhaustives et relativement difficiles à maintenir à jour.

Des systèmes plus évolués d'analyse du comportement ou des habitudes de l'utilisateur permettent de détecter une erreur de saisie mais sont inefficaces par exemple lors de l'initialisation d'un paiement vers un destinataire inconnu. Ils sont néanmoins complémentaires des solutions proposées précédemment.

Une autre solution connue de l'art antérieur propose la mise en place d'un indicateur de confiance/risque reposant sur l'évaluation d'une distance sociale inter-individus lors de toute transaction. Cette méthode repose sur la mise en oeuvre et l'exploitation d'algorithmes de détection de communautés prenant en compte les dimensions sociales et temporelles des échanges.

Un des inconvénients de cette méthode vient de l'application de la méthode de calcul de distance sociale sur un individu nouvellement utilisateur du service. Son profil social sur le réseau transactionnel est similaire à celui d'un utilisateur abusif par sa non-appartenance/intégration à la structure sociale du graphe transactionnel extrait d'une détection de communautés. Ainsi lorsque celui-ci entre en relation avec un contact, celui-ci pourra être identifié et affiché comme potentiellement abusif pour son interlocuteur, car le calcul d'une distance sociale sera impossible (distance infinie) sur la base de l'historique des échanges du service (qui n'existe pas encore ou peu dense). Ceci peut porter préjudice à l'initiateur de l'échange (nouvel utilisateur légitime) et à l'opérateur du service.

La méthode proposée dans l'art antérieur présente ainsi une limitation en ce qu'elle peut générer des faux-positifs avec les nouveaux utilisateurs qui, par leur absence d'historique d'usage, peuvent être considérés comme potentiels utilisateurs abusifs ce qui peut être préjudiciable à la fois pour l'opérateur du service et pour les clients de cet opérateur.

Il existe donc un besoin d'une technique d'aide à la décision d'utilisateurs abusifs d'un système transactionnel qui soit efficace dès les premières communications sans partage de données personnelles.

**Résumé de l'invention**

Un objet de l'invention est donc un procédé d'aide à la décision pour un utilisateur d'un premier terminal recevant une requête de communication provenant d'un deuxième terminal, l'utilisateur du deuxième terminal étant non connu par ledit utilisateur du premier terminal. Le procédé d'aide à la décision comprend une détermination d'un score de confiance de l'utilisateur du deuxième terminal et d'un écart de confiance, ledit écart de confiance apportant une information sur une fiabilité dudit score de confiance, ledit score de confiance et ledit écart de confiance étant déterminés à partir d'une liste comprenant au moins un utilisateur d'un troisième terminal auquel le deuxième terminal a déjà transmis une requête de communication. Le au moins un utilisateur du troisième terminal appartient à au moins une communauté d'utilisateurs.

Comme pour l'exploitation de la détection de communautés, le système repose sur le principe qu'une demande de communication « légitime » met en relation préférablement deux individus ayant une proximité sociale quantifiable. A l'opposé, une demande de communication faisant intervenir un interlocuteur jugé non fiable doit être repérable à partir de l'analyse d'une structure de groupe : liens et groupes éphémères, relations à sens unique, fréquences d'échanges faibles, durée de vie courte et structure peu stable, et donc de conclure à l'absence de proximité sociale.

Une proximité sociale peut être relationnelle (un membre de ma famille, un ami, un collègue...), d'intérêt (un groupe, un club, commerciale...), géographique (un commerçant, un voisin...) mais également une combinaison de ces éléments. Les communications passées et futures renforcent ou relâchent les relations/liens entre individus de ces communautés d'utilisateurs qui évoluent au fil du temps et sont donc à la base de la construction de communautés d'utilisateurs d'intérêts identifiables à partir des données de service. Les communautés ainsi constituées sont généralement plus larges, plus complètes, plus stables dans le temps que les différentes listes précitées et sont partagées entre tous les membres d'une communauté et non plus individuels.

La méthode proposée permet de régulariser le statut de l'utilisateur par son intégration progressive au réseau des communautés des utilisateurs qui se renforce par un usage « normal » du service au fil du temps. Le système proposé permet, toujours sur la base d'un calcul de distance sociale inter-individus ou d'une méthode de détection de communautés, de qualifier l'usage du service fait par tout individu et d'en produire un indicateur de confiance temps réel et évolutif, qui pourra par la suite être exploité par l'opérateur de service de manière anonyme.

Dans une variante de réalisation, la liste comprend trois utilisateurs de respectivement trois terminaux auxquels le deuxième terminal a déjà transmis une requête de communication.

Dans une variante de réalisation, la détermination du score de confiance et de l'écart de confiance comprend une sélection d'au moins une paire d'utilisateurs dans ladite liste.

Dans une variante de réalisation, la détermination du score de confiance comprend, pour chaque paire d'utilisateurs, un calcul d'une distance intercommunautaire minimale, ladite distance intercommunautaire minimale étant déterminée à partir d'ensembles de communauté auxquels appartiennent les utilisateurs de ladite paire, ledit score de confiance correspondant à une moyenne des distances intercommunautaires minimales.

Dans une variante de réalisation, si les utilisateurs d'une paire ont une communauté en commun, la distance intercommunautaire minimale de ladite paire est nulle.

Dans une variante de réalisation, si les utilisateurs d'une paire n'ont pas de communauté en commun, la distance intercommunautaire minimale de ladite paire est au moins égale à 1.

Dans une variante de réalisation, l'écart de confiance correspond à un écart-type des distances intercommunautaires minimales des paires.

Dans une variante de réalisation, le score de confiance correspond à une cardinalité d'une union de communautés d'utilisateurs auxquelles les trois utilisateurs de la liste appartiennent.

Dans une variante de réalisation, l'écart de confiance correspond au score de confiance auquel on soustrait une moyenne de cardinalités d'unions des communautés d'utilisateurs auxquelles les trois utilisateurs de la liste appartiennent.

Un autre objet de l'invention concerne un système d'aide à la décision pour un utilisateur d'un premier terminal recevant une requête de communication provenant d'un deuxième terminal, l'utilisateur du deuxième terminal étant non connu par ledit utilisateur du premier terminal. Le système d'aide à la décision comprend un dispositif de calcul et une base de communications, ledit dispositif de calcul et ladite base de communications étant aptes à déterminer un score de confiance de l'utilisateur du deuxième terminal et un écart de confiance, ledit écart de confiance apportant une information sur une fiabilité dudit score de confiance. Le score de confiance et l'écart de confiance sont déterminés à partir d'une liste comprenant au moins un utilisateur d'un troisième terminal auquel le deuxième terminal a déjà transmis une requête de communication, le au moins un utilisateur du troisième terminal appartenant à au moins une communauté d'utilisateurs.

Dans une variante de réalisation, le dispositif de calcul est adapté pour transmettre le score de confiance et l'écart de confiance au premier terminal.

Dans une variante de réalisation, le système comprend un serveur applicatif, ledit serveur applicatif étant apte à traiter ledit score de confiance et ledit écart de confiance et à envoyer le résultat dudit traitement au premier terminal.

Un autre objet de l'invention concerne un programme d'ordinateur comprenant des instructions de code de programme pour l'exécution des étapes du procédé d'aide à la décision selon l'invention, lorsque ledit programme est exécuté par un processeur.

Un autre objet de l'invention concerne un support d'enregistrement lisible par un ordinateur sur lequel est enregistré un programme d'ordinateur comprenant des instructions de code de programme pour l'exécution d'un procédé d'aide à la décision selon l'invention, lorsque ledit programme est exécuté par un processeur.

**Description des figures**

La figure 1 illustre un exemple de réseau de communication mettant en oeuvre un procédé d'aide à la décision selon les modes de réalisation de l'invention ;

La figure 2 illustre un exemple de terminal configuré pour émettre une requête de communication dans le réseau de communication de la figure 1 ;

La figure 3 illustre un exemple d'un historique de communications entre différents utilisateurs du réseau de communication de la figure 1 ;

La figure 4 représente un graphe illustrant l'historique de communications de la figure 3 ;

La figure 5 représente un tableau listant des communautés auxquelles appartiennent les différents utilisateurs du réseau de communication de la figure 1 ;

La figure 6 représente le graphe de la figure 4 associé à la liste des communautés de la figure 5 ;

La figure 7 représente un graphe de communautés obtenu à partir d'une association de données de la figure 6 ;

La figure 8 représente une matrice de stockage de distance minimale entre des communautés de la figure 7 ;

La figure 9 représente un tableau correspondant au tableau de la figure 5, avec des colonnes supplémentaires ;

La figure 10 illustre un exemple de terminal configuré pour recevoir une requête de communication via le réseau de communication de la figure 1 ;

La figure 11 représente les différentes étapes d'un procédé d'aide à la décision selon un premier mode de réalisation de l'invention ;

La figure 12 représente les différentes étapes d'un procédé d'aide à la décision selon un second mode de réalisation de l'invention ;

La figure 13 illustre de manière détaillée un système d'aide à la décision utilisé dans le réseau de la figure 1.

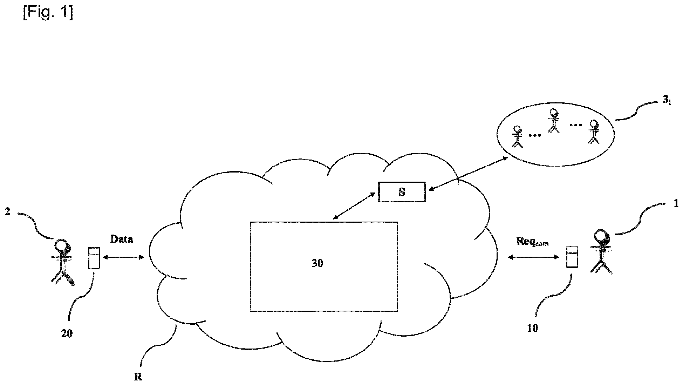

La figure 1 représente un réseau de communication R pour l'échange de données entre un terminal 10 d'un utilisateur 1 et un terminal 20 d'un utilisateur 2.

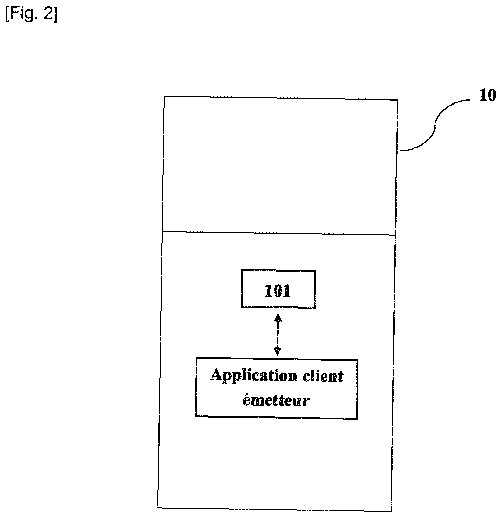

Le terminal 10 de l'utilisateur 1 est adapté pour transmettre une requête de communication $Req_{com}$ au terminal 20 en vue d'établir une communication avec l'utilisateur 2. La figure 2 détaille la structure d'un tel terminal 10.

Le terminal 10 est ici un terminal intelligent, ou « smartphone » en anglais, adapté pour mettre en oeuvre des applications logicielles. Le terminal 10 comprend ainsi un module d'interface 101 et une application client émetteur. Le module d'interface 101 permet à l'utilisateur 1 de transmettre un ordre pour l'envoi d'une requête de communication $Req_{com}$ à destination du terminal 20. Typiquement, le module d'interface 101 est un clavier du terminal 10. En variante, le module d'interface 101 pourrait être une commande vocale. L'application client émetteur est adaptée pour générer et transmettre au réseau de communication R la requête de communication $Req_{com}$ à partir de l'ordre d'envoi provenant du module d'interface 101 du terminal 10.

Tel qu'illustré à la figure 1, le réseau de communication R comprend un système d'aide à la décision 30 et un dispositif de supervision S. Le système d'aide à la décision 30 est apte à recevoir une demande de détermination d'un score de confiance Sconf associé à l'utilisateur 1 et d'un écart de confiance Deltaconf. Une telle demande est issue de la requête de communication $Req_{com}$. Le score de confiance Sconf apporte une information sur la confiance à accorder à l'utilisateur 1. L'écart de confiance Deltaconf apporte une information sur la fiabilité dudit score de confiance Sconf. En réponse à cette demande de détermination, le système d'aide à la décision 30 est adapté pour transmettre au terminal 20 des données Data associées à la détermination du score de confiance et de l'écart de confiance Deltaconf.

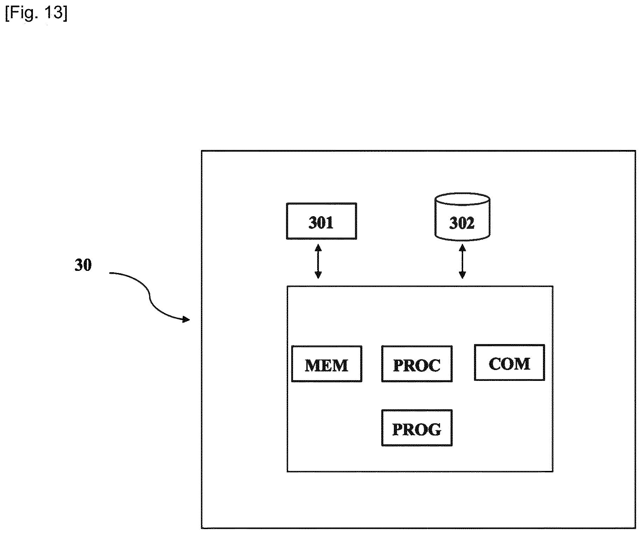

La figure 13 illustre de manière plus détaillée le système d'aide à la décision 30. Ce système d'aide à la décision 30 comprend au moins un processeur PROC et au moins une mémoire MEM. Plus particulièrement, le système 30 dispose, selon un mode de réalisation, de l'architecture matérielle d'un ordinateur. La mémoire MEM constitue un support d'informations conforme à l'invention, c'est-à-dire lisible par le processeur PROC et sur lequel est enregistré un programme d'ordinateur PROG conforme à l'invention. Le programme PROG comporte des instructions pour réaliser des étapes d'un procédé conforme à l'invention, lorsque le programme PROG est exécuté par le processeur PROC. Le programme PROG définit notamment les modules fonctionnels du système 30, qui commandent les éléments matériels de ce dernier.

Comme illustré sur la figure 13, le système 30 comprend un dispositif de communication COM configuré pour communiquer avec notamment le dispositif de supervision S et les terminaux 10 et 20 de la figure 1. Aucune limitation n'est attachée à la nature des interfaces de communication entre ces dispositifs, qui peuvent mettre en oeuvre tout protocole connu de l'homme du métier.

Le système d'aide à la décision 30 comprend en outre :

-   un dispositif de calcul 301 ;

-   une base de communications 302.

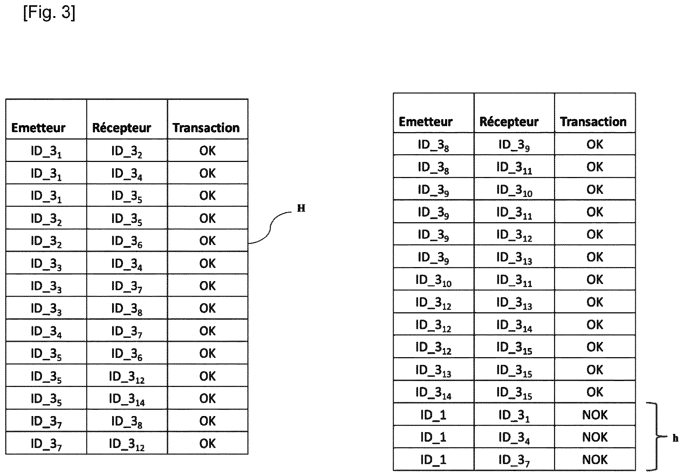

Le dispositif de calcul 301 est adapté pour calculer le score de confiance Sconf et l'écart de confiance Deltaconf à partir d'informations stockées dans la base de communications 302. Plus particulièrement, la base de communications 302 stocke un historique H de requêtes de communication entre différents terminaux d'utilisateurs du réseau de communication. La figure 3 illustre un exemple d'un tel historique entre par exemple quinze utilisateurs $3_1$ à $3_{15}$, le ou les terminaux de chacun de ces utilisateurs pouvant jouer le rôle d'émetteur ou de récepteur de requête de communication. Ces utilisateurs sont respectivement référencés dans l'historique H à partir d'un identifiant ID_$3_1$ à ID_$3_{15}$. Dans un mode de réalisation particulier non illustré ici, l'identifiant utilisé est un identifiant MSISDN (pour « Mobile Station International Subscriber Directory Number » en anglais). Lorsqu'une requête de communication transmise par un terminal d'un de ces utilisateurs est acceptée par un terminal d'un autre de ces utilisateurs, une transaction est passée. L'historique H liste ainsi les transactions réalisées, dites transactions OK, et les transactions non réalisées, dites transactions NOK. Dans l'exemple de la figure 3, toutes les transactions entre les utilisateurs contacts $3_1$ à $3_{15}$ ont été réalisées.

L'historique H liste également les requêtes de communication ayant été transmises par le terminal 10 de l'utilisateur 1. L'utilisateur 1 est référencé à partir de l'identifiant ID_1. Aucune transaction n'est validée pour cet utilisateur 1, puisque celui-ci n'est pas connu des différents utilisateurs $3_1$ à $3_{15}$. Il est ainsi possible d'établir une liste h d'utilisateurs auxquels l'utilisateur1 a préalablement transmis une requête de communication via son terminal 10.

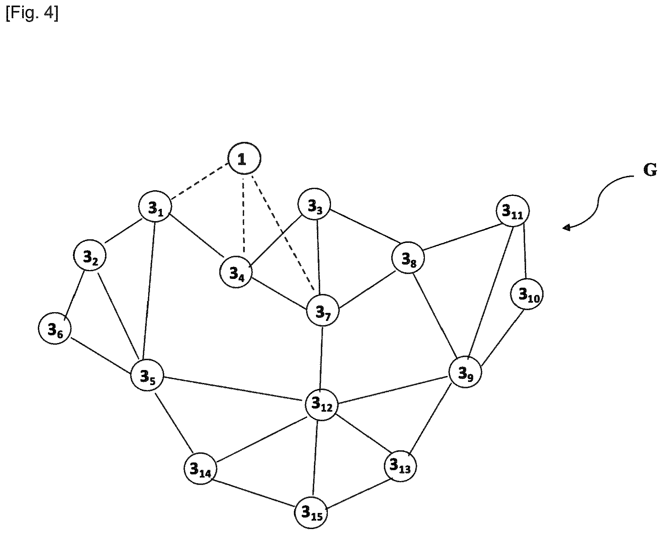

La figure 4 représente un graphe G illustrant l'historique de communications de la figure 3. Sur ce graphe G, chaque utilisateur $3_1$ à $3_{15}$ représente un noeud circulaire. Les transactions OK entres les noeuds sont représentées pas des traits pleins.

De cette figure 4, il est possible de déduire les informations suivantes :

-   un premier utilisateur $3_1$ a déjà effectué au moins une transaction avec un second utilisateur $3_2$, un quatrième utilisateur $3_4$ et un cinquième utilisateur 3s ;

-   le second utilisateur $3_2$ a déjà effectué au moins une transaction avec le premier utilisateur $3_1$, le cinquième utilisateur $3_5$ et un sixième utilisateur $3_6$ ;

-   un troisième utilisateur 3s a déjà effectué au moins une transaction avec un quatrième utilisateur $3_4$, un septième utilisateur $3_7$ et un huitième utilisateur $3_8$ ;

-   le quatrième utilisateur $3_4$ a déjà effectué au moins une transaction avec le premier utilisateur $3_1$, le troisième utilisateur $3_3$ et le septième utilisateur $3_7$ ;

-   le cinquième utilisateur 3s a déjà effectué au moins une transaction avec le premier utilisateur $3_1$, le second utilisateur $3_2$, le sixième utilisateur $3_6$, un douzième utilisateur $3_{12}$ et un quatorzième utilisateur $3_{14}$ ;

-   le sixième utilisateur $3_6$ a déjà effectué au moins une transaction avec le second utilisateur $3_2$ et le cinquième utilisateur $3_5$ ;

-   le septième utilisateur $3_7$ a déjà effectué au moins une transaction avec le troisième utilisateur $3_3$, le quatrième utilisateur $3_4$, le huitième utilisateur $3_8$ et le douzième utilisateur $3_{12}$ ;

-   le huitième utilisateur 3s a déjà effectué au moins une transaction avec le troisième utilisateur $3_3$, le septième contact $3_7$, un neuvième utilisateur $3_9$ et un onzième utilisateur $3_{11}$ ;

-   le neuvième utilisateur $3_9$ a déjà effectué au moins une transaction avec le huitième utilisateur $3_8$, un dixième utilisateur $3_{10}$, le onzième utilisateur $3_{11}$, le douzième utilisateur $3_{12}$, et un treizième utilisateur $3_{13}$ ;

- le dixième utilisateur $3_{10}$ a déjà effectué au moins une transaction avec le neuvième utilisateur $3_9$ et le onzième utilisateur $3_{11}$ ;

- le onzième utilisateur $3_{11}$ a déjà effectué au moins une transaction avec le huitième utilisateur $3_8$, le neuvième utilisateur $3_9$ et le dixième utilisateur $3_{10}$ ;

- le douzième utilisateur $3_{12}$ a déjà effectué au moins une transaction avec le cinquième utilisateur $3_s$, le septième utilisateur $3_7$, le neuvième utilisateur $3_9$, le treizième utilisateur $3_{13}$, le quatorzième utilisateur $3_{14}$ et un quinzième utilisateur $3_{15}$ ;

- le treizième utilisateur $3_{13}$ a déjà effectué au moins une transaction avec le neuvième utilisateur $3_9$, le douzième utilisateur $3_{12}$ et le quinzième utilisateur $3_{15}$ ;

- le quatorzième utilisateur $3_{14}$ a déjà effectué au moins une transaction avec le cinquième utilisateur $3_5$, le douzième utilisateur $3_{12}$ et le quinzième utilisateur $3_{15}$ ;

- le quinzième utilisateur $3_{15}$ a déjà effectué au moins une transaction avec le douzième utilisateur $3_{12}$, le treizième utilisateur $3_{13}$ et le quatorzième utilisateur $3_{14}$.

Les traits pointillés entre l'utilisateur 1 et l'utilisateur $3_1$, l'utilisateur $3_4$ et l'utilisateur $3_7$ représentent des transactions NOK, c'est-à-dire des communications qui n'ont pas fait l'objet d'une acceptation par les utilisateurs $3_1$, $3_4$, $3_7$ respectifs.

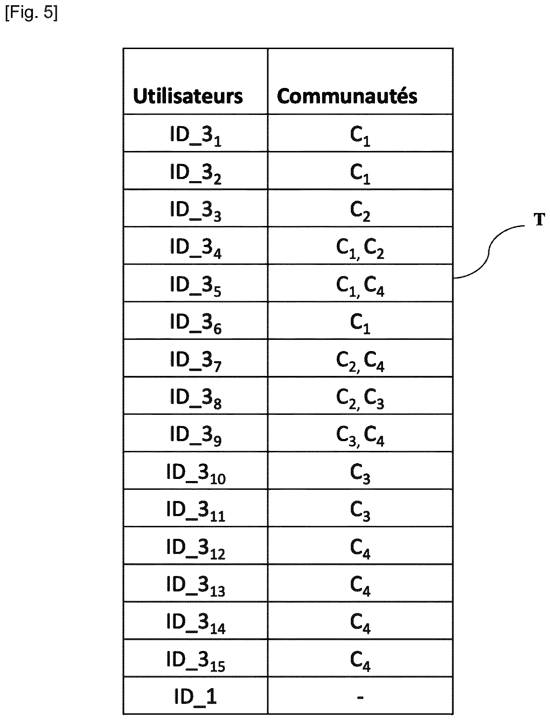

La figure 5 représente un tableau T listant, pour chaque utilisateur $3_1$ à $3_{15}$, la ou les communautés d'appartenance. Des utilisateurs appartiennent à une même communauté car ils partagent au moins un intérêt commun (membres d'une même famille, collègues d'une entreprise ou d'un groupe d'entreprises, étudiants d'un même cercle universitaire, membres d'une fédération sportive, etc.) ou des relations les conduisant à communiquer sous diverses formes. Cette communauté constitue ainsi une sphère de confiance. Un même utilisateur $3_1$ à $3_{15}$ peut appartenir à plusieurs communautés. La construction de ces communautés s'appuie sur un ensemble d'algorithmes de l'état de l'art modifiés et optimisés pour s'adapter à la structure, à la volumétrie des données et au contexte d'application. Les communautés sont représentées dans le tableau T par un identifiant de communautés $C_j$, où $1 \leq j \leq 4$ dans l'exemple représenté. De ce tableau T, il est ainsi possible de déduire les informations suivantes :

- l'utilisateur $3_1$ appartient à une première communauté $C_1$ ;

- l'utilisateur $3_2$ appartient à la première communauté $C_1$ ;

- l'utilisateur $3_3$ appartient à une seconde communauté $C_2$ ;

- l'utilisateur $3_4$ appartient à la première communauté $C_1$ et à la deuxième communauté C2 ;

- l'utilisateur $3_5$ appartient à la première communauté $C_1$ et à une quatrième communauté $C_4$ ;

- l'utilisateur $3_6$ appartient à la première communauté $C_1$ ;

- l'utilisateur $3_7$ appartient à la deuxième communauté $C_2$ et à la quatrième communauté $C_4$ ;

- l'utilisateur $3_8$ appartient à la seconde communauté $C_2$ et à la troisième communauté $C_3$ ;

- l'utilisateur $3_9$ appartient à la troisième communauté $C_3$ et à la quatrième communauté $C_4$ ;

- l'utilisateur $3_{10}$ appartient à la troisième communauté $C_3$ ;

- l'utilisateur $3_{11}$ appartient à la troisième communauté $C_3$ ;

- l'utilisateur $3_{12}$ appartient à la quatrième communauté $C_4$ ;

- l'utilisateur $3_{13}$ appartient à la quatrième communauté $C_4$ ;

- l'utilisateur $3_{14}$ appartient à la quatrième communauté $C_4$ ;

- l'utilisateur $3_{15}$ appartient à la quatrième communauté $C_4$.

On notera qu'à ce stade, l'utilisateur 1 n'appartient à aucune communauté.

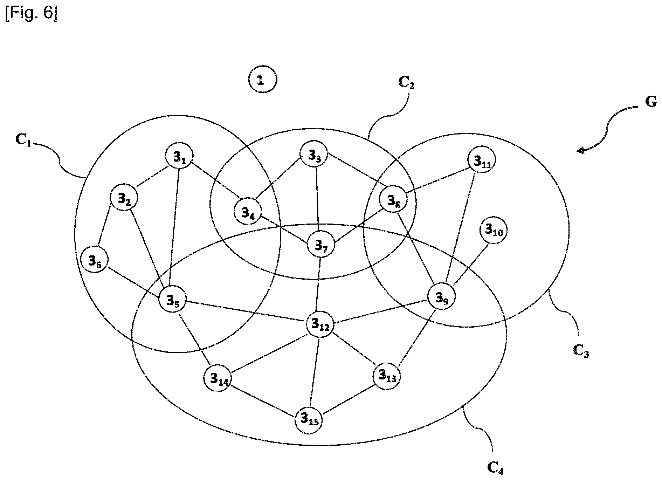

La figure 6 illustre un groupement des utilisateurs $3_1$ à $3_{15}$ du graphe G de la figure 4, sur lequel sont positionnées les différentes communautés $C_1$ à $C_4$. Chaque communauté est matérialisée par une forme globalement circulaire englobant les utilisateurs appartenant à ladite communauté. Ainsi, comme il a déjà été précisé, l'utilisateur $3_1$, l'utilisateur $3_2$, l'utilisateur $3_4$, l'utilisateur $3_s$, l'utilisateur $3_6$ appartiennent à la première communauté $C_1$. L'utilisateur $3_3$, l'utilisateur $3_4$, l'utilisateur $3_7$ et l'utilisateur $3_8$ appartiennent à la seconde communauté $C_2$. L'utilisateur $3_8$, l'utilisateur $3_9$, l'utilisa-

teur $3_{10}$ et l'utilisateur $3_{11}$ appartiennent à la troisième communauté $C_3$. L'utilisateur $3_5$, l'utilisateur $3_7$, l'utilisateur $3_9$, l'utilisateur $3_{12}$, l'utilisateur $3_{13}$, l'utilisateur $3_{14}$ et l'utilisateur $3_{15}$ appartiennent à la quatrième communauté $C_4$.

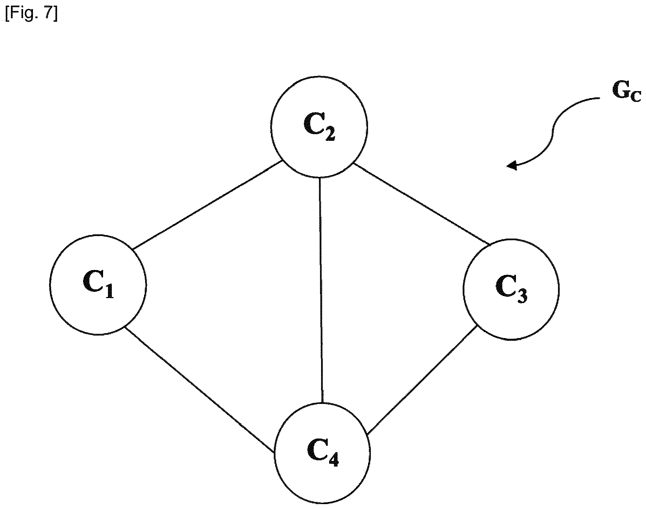

Les différentes communautés $C_1$ à $C_4$ peuvent être perçues comme un graphe de communautés comportant des noeuds et des arcs reliant lesdits noeuds. Un tel graphe de communautés, référencé Gc, est illustré à la figure 7. Chaque noeud correspond ainsi à une communauté. Les noeuds sont reliés entre eux lorsqu'il existe au moins un utilisateur commun entre les communautés. Dans le cas du graphe de communauté $G_C$ de la figure 7, il existe un arc entre le noeud associé à la première communauté $C_1$ et le noeud associé à la seconde communauté $C_2$, car l'utilisateur $3_4$ est commun aux deux communautés. De la même manière, il existe un arc entre le noeud associé à la première communauté $C_1$ et le noeud associé à la quatrième communauté $C_4$ car l'utilisateur 3s est commun aux deux communautés $C_1$ et $C_4$. De plus, il existe un arc entre le noeud associé à la seconde communauté $C_2$ et le noeud associé à la troisième communauté $C_3$ car l'utilisateur 3s est commun aux deux communautés $C_2$ et $C_3$. En outre, il existe un arc entre le noeud associé à la seconde communauté $C_2$ et le noeud associé à la quatrième communauté $C_4$ car l'utilisateur $3_7$ est commun aux deux communautés $C_2$ et $C_4$. Enfin, il existe un arc entre le noeud associé à la troisième communauté $C_3$ et le noeud associé à la quatrième communauté $C_4$ car l'utilisateur $3_9$ est commun aux deux communautés $C_3$ et $C_4$.

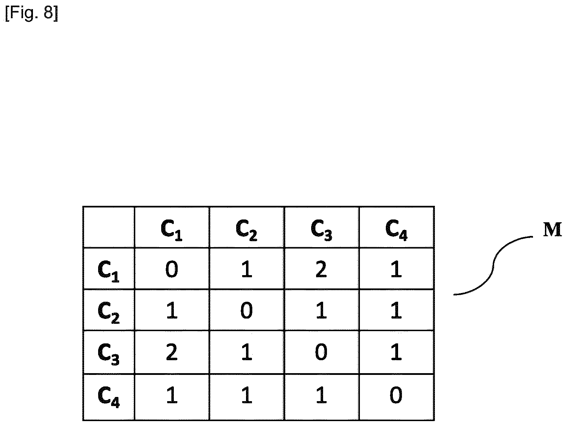

A partir du graphe de communauté $G_C$, il est possible de construire une matrice M de stockage de distance minimale entre les différentes communautés. Une telle matrice M est notamment illustrée à la figure 8. Cette matrice M contient des valeurs entières comprises entre 0 et 2. La valeur 0 est associée à une distance nulle. La valeur 1 est associée à une distance entre deux communautés reliées par un arc, telles que les couples de communautés $C_1$, $C_2$ ; $C_1$, $C_4$ ; $C_2$, $C_3$ ; $C_2$, $C_4$ ; $C_3$, $C_4$. La valeur 2 est attribuée lorsqu'une communauté intermédiaire relie deux communautés qui n'ont pas d'arc en commun, telle que par exemple le couple de communautés $C_1$, $C_3$ relié soit par la seconde communauté $C_2$, soit par la quatrième communauté $C_4$. La matrice M de stockage de distance est stockée dans la base de communications 302.

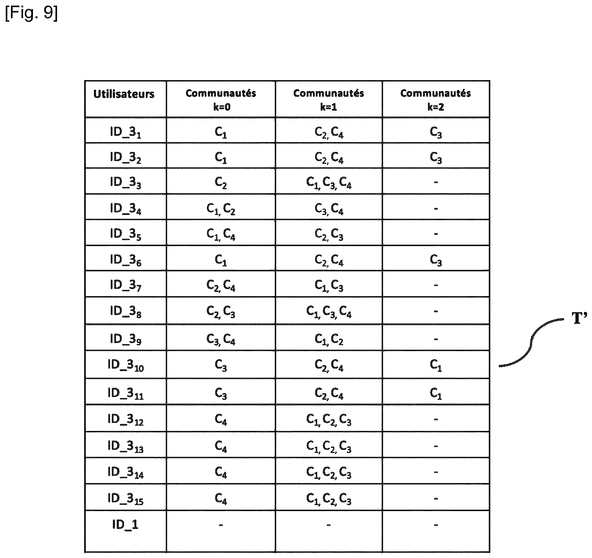

La figure 9 représente une variante de réalisation d'un tableau T'correspondant à une extension du tableau T de la figure 5. Dans ce tableau T', il est déterminé, pour chaque utilisateur des communautés précitées, différents niveaux de voisinage k. Le niveau de voisinage k=0 correspondant au niveau de voisinage détaillé à la figure 5. Le niveau de voisinage k=1 correspond à un niveau de proximité directe avec la ou les communautés du niveau de voisinage k=0. Le niveau de voisinage k=2 correspond à un niveau de proximité directe avec la ou les communautés du niveau de voisinage k=1. Ainsi, à titre d'exemple, le niveau de voisinage k=0 de l'utilisateur $3_1$ comprend la première communauté $C_1$. Le niveau de voisinage k=1 pour ce même utilisateur comprend la seconde communauté $C_2$ et la quatrième communauté $C_4$. Enfin, le niveau de voisinage k=2 pour ce même utilisateur comprend la troisième communauté $C_3$. Toujours à titre d'exemple, le niveau de voisinage k=0 de l'utilisateur $3_3$ comprend la communauté $C_2$. Le niveau de voisinage k=1 pour ce même utilisateur comprend la communauté $C_1$, la communauté $C_3$ et la communauté $C_4$. Enfin, le niveau de voisinage k=2 pour ce même utilisateur ne comprend aucune communauté.

Comme il est illustré sur la figure 1, la base de communications 302 est mise à jour par le dispositif de supervision S. Ce dispositif de supervision S est adapté pour écouter le réseau de communication R et pour détecter toute transaction entre i utilisateurs $3_1$ à $3_{15}$, où $1 \leq i \leq 15$ dans l'exemple représenté. Le dispositif de supervision S est également adapté pour détecter les requêtes de communication provenant de l'utilisateur 1. De manière périodique, le dispositif de supervision S met à jour l'historique de communications H, le tableau T listant les communautés $C_1$ à $C_4$, le tableau T' et la matrice M de stockage de distance minimale.

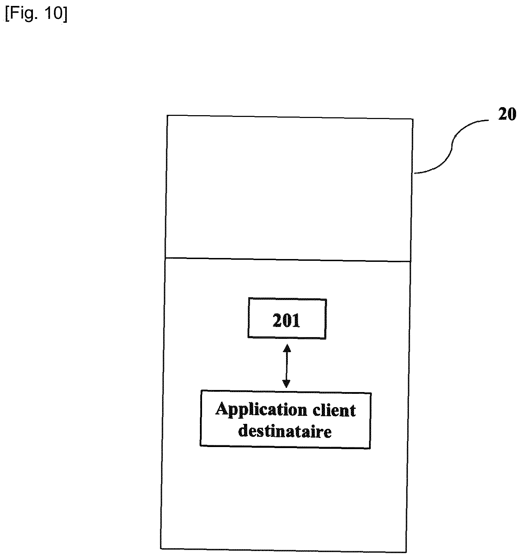

Le terminal 20 de l'utilisateur 2 est adapté pour recevoir les données Data associées à la détermination du score de confiance et de l'écart de confiance Deltaconf. Un tel terminal 20 est notamment illustré à la figure 10. Il comprend :

- une application client récepteur ;

- un module d'interface 201.

L'application client récepteur est adaptée pour recevoir et traiter les données Data.

Le module d'interface 201 est adapté pour restituer le résultat de ce traitement à l'utilisateur 2 sur une interface dédiée du terminal 20 ou d'un autre terminal.

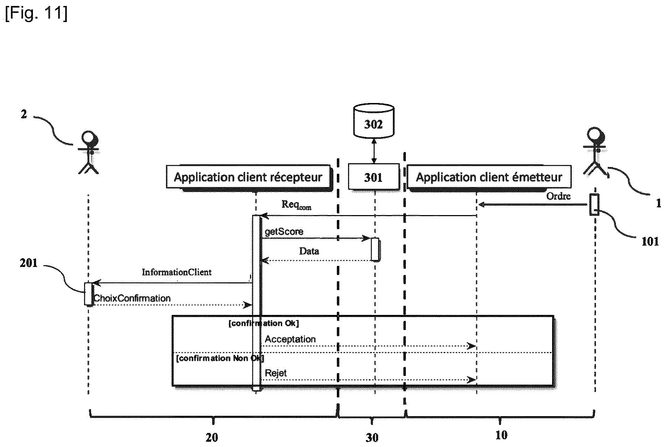

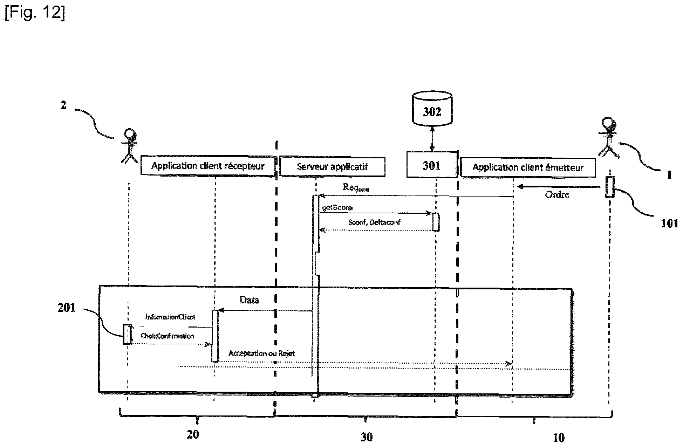

En fonction du type de terminal 20, le traitement apporté aux données Data ne sera pas le même. La figure 11 illustre les étapes d'un procédé d'aide à la décision selon un premier mode de réalisation, dans lequel un terminal 20, qui est destinataire de la requête de communication $Req_{com}$, est un « smartphone » ou terminal intelligent. La figure 12 illustre les étapes d'un procédé d'aide à la décision, selon un second mode de réalisation, dans lequel le terminal 20 est d'une capacité plus faible que le terminal 20 utilisé dans le procédé de la figure 11.

Le procédé d'aide à la décision illustré à la figure 11 comprend une transmission d'un ordre Ordre par l'utilisateur 1 via le module d'interface 101 de son terminal 10 à l'application client émetteur de ce même terminal 10. A la réception de cet ordre, l'application client émetteur transmet une requête de communication $Req_{com}$ à l'application client récepteur du terminal 20 de l'utilisateur 2. Cette requête comprend un identifiant ID_1 de l'utilisateur 1. L'application client récepteur transmet au dispositif de calcul 301 une demande getScore de détermination d'un score de confiance Sconf de l'utilisateur 1 et d'un écart de confiance Deltaconf. Cette demande getScore comprend l'identifiant ID_1 de l'utilisateur 1. En retour, le dispositif de calcul 301 fournit les données Data à l'application client récepteur. Ces données Data sont ici le score de confiance Sconf de l'utilisateur 1 et l'écart de confiance Deltaconf. Le dispositif de calcul 301 détermine ces données Data en consultant la base de communications 302. Le score de confiance Sconf et l'écart de confiance Deltaconf peuvent être déterminés par différentes méthodes.

Dans une première méthode, le dispositif de calcul 301 utilise les informations contenues dans l'historique H de la figure 3, dans le tableau T de la figure 5 et dans la matrice M de la figure 8. A partir de l'historique H, il est possible d'établir une liste h d'utilisateur(s) au(x) quel(s) l'utilisateur émetteur 1 a préalablement transmis une requête de communication, via son terminal 20. Comme déjà expliqué en référence à la figure 3, cette liste h est un sous-ensemble de l'historique H. Dans l'exemple de la figure 3, l'utilisateur 1 a préalablement transmis une requête de communication à l'utilisateur $3_1$, à l'utilisateur $3_4$ et à l'utilisateur $3_7$.

Chacun de ces utilisateurs $3_1$, $3_4$, $3_7$ appartient à une communauté.

A partir du tableau T de la figure 5, il est ainsi possible de définir que :

- l'utilisateur $3_1$ appartient à la communauté $C_1$ (première ligne du tableau T) ;

- l'utilisateur $3_4$ appartient aux communautés $C_1$ et $C_2$ (quatrième ligne du tableau T) ;

- l'utilisateur $3_7$ appartient aux communautés $C_2$ et $C_4$ (septième ligne du tableau T).

A partir des utilisateurs de la liste h, Il est constitué des paires d'utilisateurs contacts $[3_1, 3_4]$, $[3_1, 3_7]$ et $[3_4, 3_7]$.

Dans chacune des paires d'utilisateurs, il est déterminé au moins une distance intercommunautaire minimale D avec $D = Min(M(C_m, C_n))$ où m et n sont des entiers compris ici entre 1 et 4. Cette distance intercommunautaire minimale est obtenue en comparant les communautés auxquelles appartiennent les utilisateurs de la paire à l'aide de la matrice M de la figure 8.

Ainsi dans la paire $[3_1, 3_4]$, il est déterminé une première distance entre la communauté $C_1$ de l'utilisateur $3_1$ et la communauté $C_1$ de l'utilisateur $3_4$ et une deuxième distance entre la communauté $C_1$ de l'utilisateur $3_1$ et la communauté $C_2$ de l'utilisateur $3_4$. Conformément à la figure 8, la première distance est nulle (intersection $C_1$-$C_1$ dans le tableau T) et la seconde distance vaut 1 (intersection $C_1$-$C_2$ dans le tableau T). Dès lors, la distance intercommunautaire minimale est ici nulle (le minimum entre 0 et 1).

Dit autrement, $D[3_1, 3_4] = Min(M(C_1, C_1), M(C_1, C_2)) = Min(0, 1) = 0$.

De la même manière, pour la paire $[3_1, 3_7]$, $D[3_1, 3_7] = Min(M(C_1, C_2), M(C_1, C_4)) = Min(1, 1) = 1$.

Pour la paire $[3_4, 3_7]$, $D[3_4, 3_7] = Min(M(C_1, C_2), M(C_1, C_4), M(C_2, C_2), M(C_2, C_4)) = Min(1, 1, 0, 1) = 0$.

Le score de confiance Sconf correspond à la moyenne des distances intercommunautaires minimales des différentes paires d'utilisateurs. Dit autrement, Sconf = Moyenne ($D[3_1, 3_4]$, $D[3_1, 3_7]$, $D[3_4, 3_7]$) = Moyenne (0, 1, 0) = 0,33.

L'écart de confiance Deltaconf correspond à l'écart-type des distances intercommunautaires minimales des différentes paires d'utilisateurs. Ainsi, Deltaconf = Ecart-type ($D[3_1, 3_4]$, $D[3_1, 3_7]$, $D[3_4, 3_7]$).

Les écarts sont déterminés ici par rapport à la moyenne 0,33. L'écart-type correspond à la moyenne quadratique de ces écarts, d'où Deltaconf =

$$\frac{\sqrt{\left(0,33^2 + 0,67^2 + 0,33^2\right)}}{3}$$ , soit 0,47.

Dans une seconde méthode de détermination du score de confiance Sconf et de l'écart de confiance Deltaconf, le dispositif de calcul 301 utilise les informations contenues dans l'historique H de la figure 3 et dans le tableau étendu T' de la figure 9. De la même manière que dans la première méthode, à partir de l'historique H, il est possible d'établir une liste h d'utilisateur(s) au(x) quel(s) l'utilisateur 1 a préalablement transmis une requête de communication, via son terminal 20. Dans l'exemple de la figure 3, l'utilisateur 1 a préalablement transmis une requête de communication à l'utilisateur $3_1$, à l'utilisateur $3_4$ et à l'utilisateur $3_7$.

Chacun de ces utilisateurs $3_1$, $3_4$, $3_7$ appartient à une communauté.

A partir du tableau étendu T' de la figure 5, il est ainsi possible de définir que :

- l'utilisateur $3_1$ appartient à la communauté $C_1$ (première ligne du tableau T pour un niveau de voisinage k=0), l'utilisateur $3_1$ est voisin de la communauté $C_2$ et de la communauté $C_4$ à un niveau de voisinage k=1 et l'utilisateur $3_1$ est voisin de la communauté $C_3$ à un niveau de voisinage k=2 ;

- l'utilisateur $3_4$ appartient aux communautés $C_1$ et $C_2$ (quatrième ligne du tableau T pour un niveau de voisinage k=0), l'utilisateur $3_4$ est voisin de la communauté $C_3$ et de la communauté $C_4$ à un niveau de voisinage k=1 ;

- l'utilisateur $3_7$ appartient aux communautés $C_2$ et $C_4$ (septième ligne du tableau T pour un niveau de voisinage k=0), l'utilisateur $3_7$ est voisin de la communauté $C_1$ et de la communauté $C_3$ à un niveau de voisinage k=1.

A partir des utilisateurs de la liste h, Il est constitué des paires d'utilisateurs $[3_1, 3_4]$, $[3_1, 3_7]$ et $[3_4, 3_7]$.

Dans chacune des paires d'utilisateurs , il est déterminé au moins une distance intercommunautaire minimale D avec $D=Min\ (M(C_{m'}, C_{n'}))$ où m' et n' sont des entiers compris ici entre 1 et 4. Cette distance intercommunautaire minimale est obtenue en comparant les communautés auxquelles appartiennent les utilisateurs de la paire dans le tableau T' de la figure 9.

Pour la paire d'utilisateurs $[3_1, 3_4]$, la communauté $C_1$ est commune aux utilisateurs $3_1$ et $3_4$. Dès lors, la distance intercommunautaire minimale $D[3_1, 3_4]$ est nulle.

Pour la paire d'utilisateurs $[3_4, 3_7]$, la communauté $C_2$ est commune aux utilisateurs $3_4$ et $3_7$. Dès lors, la distance intercommunautaire minimale $D[3_4, 3_7]$ est nulle.

Pour la paire d'utilisateurs $[3_1, 3_7]$, il n'y a pas de communauté commune à un niveau de voisinage k=0. Cependant, la communauté $C_1$ se retrouve à un niveau de voisinage k=1 pour l'utilisateur $3_7$. Dès lors, la distance intercommunautaire minimale $D[3_1, 3_7]$ est égale à 1.

Le score de confiance Sconf correspond à la moyenne des distances intercommunautaires minimales des différentes paires d'utilisateurs. Dit autrement, Sconf = Moyenne $(D[3_1, 3_4], D[3_1, 3_7], D[3_4, 3_7])$ = Moyenne (0, 1, 0) = 0,33.

L'écart de confiance Deltaconf correspond à l'écart-type des distances intercommunautaires minimales des différentes paires d'utilisateurs contacts. Ainsi, Deltaconf = Ecart-type $(D[3_1, 3_4], D[3_1, 3_7], D[3_4, 3_7])$.

Les écarts sont déterminés ici par rapport à la moyenne 0,33. L'écart-type est la moyenne quadratique de ces écarts, d'où

$$Deltaconf = \sqrt{\frac{(0,33^2 + 0,67^2 + 0,33^2)}{3}}$$

, soit 0,47.

Dans une troisième méthode, le dispositif de calcul 301 utilise les informations contenues dans l'historique H de la figure 3, dans le tableau T de la figure 5 et dans la matrice M de la figure 8. A partir de l'historique H, il est possible d'établir une liste h d'utilisateur(s) au(x) quel(s) l'utilisateur 1 a préalablement transmis une requête de communication. Comme il a déjà été précisé, cette liste h est un sous-ensemble de l'historique H. Dans l'exemple de la figure 3, l'utilisateur 1 a préalablement transmis une requête de communication à l'utilisateur $3_1$, à l'utilisateur $3_4$ et à l'utilisateur $3_7$.

Chacun de ces utilisateurs $3_1$, $3_4$, $3_7$ appartient à une communauté.

A partir du tableau T de la figure 5, il est ainsi possible de définir que :

- l'utilisateur $3_1$ appartient à la communauté $C_1$ (première ligne du tableau T) ;

- l'utilisateur $3_4$ appartient aux communautés $C_1$ et $C_2$

(quatrième ligne du tableau T) ;

- l'utilisateur $3_7$ appartient aux communautés $C_2$ et $C_4$ (septième ligne du tableau T).

A partir des utilisateurs de la liste h, Il est constitué des paires d'utilisateurs $[3_1, 3_{40}]$, $[3_1, 3_7]$ et $[3_4, 3_7]$.

Le score de confiance Sconf correspond ici à la cardinalité de l'union des communautés des utilisateurs.

Dit autrement, Sconf = $|3_1 \cup 3_4 \cup 3_7|$ = $|[C_1] \cup [C_1, C_2] \cup [C_2, C_4]|$ = $|[C_1, C_2, C_4]|$. La cardinalité de l'union des communautés des utilisateurs est donc ici égale à 3.

L'écart de confiance Deltaconf correspond au score de confiance Sconf auquel on soustrait une moyenne de cardinalités des unions des communautés des utilisateurs.

Dit autrement, Deltaconf = $|3_1 \cup 3_4 \cup 3_7|$ - moyenne$(|3_1 \cup 3_4|, |3_1 \cup 3_7|, |3_4 \cup 3_7|)$ = $|[C_1, C_2, C_4]|$ - moyenne$(|[C_1, C_2]|, |[C_1, C_2, C_4]|, [C_1, C_2, C_4]|)$ = 3 - moyenne(2, 3, 3) = 0,33.

Comme il a déjà été indiqué, l'application client récepteur de la figure 11 est adaptée pour traiter le score de confiance Sconf et l'écart de confiance Deltaconf déterminés par l'une ou l'autre des méthodes exposées ci-dessus. Pour cela, l'application client récepteur exploite un premier seuil pour le score de confiance et un second seuil pour l'écart de confiance.

Si le score de confiance déterminé par le dispositif de calcul 301 est supérieur au premier seuil, cela indique que l'utilisateur 2 est un utilisateur abusif utilisant des pratiques de type phishing, scam ou spam. Dans ce genre de pratique, l'utilisateur abusif a tendance à contacter un très large panel d'utilisateurs, ce qui provoque une divergence par rapport à la normale (moyenne élevée).

Si le score de confiance déterminé par le dispositif de calcul 301 est inférieur au premier seuil, il est alors comparé l'écart de confiance Deltaconf au second seuil. Un utilisateur « nouvel entrant » a logiquement tendance à contacter des utilisateurs légitimes, installés, ayant une probabilité de lien social forte. Par utilisateur « légitime », on entend un membre reconnu du service qui aura par son usage habituel tendance à contacter ou à être contacté par d'autres utilisateurs. Ainsi, un utilisateur 1 de bonne foi orientera sa stratégie de prise de contact auprès de plusieurs utilisateurs légitimes, ce qui limitera les écarts entre les utilisateurs contactés. L'écart de confiance Deltaconf sera alors faible. A l'inverse, un utilisateur 1 abusif aura une stratégie de prise de contact erratique en contactant à la fois des utilisateurs légitimes et des utilisateurs non légitimes, ce qui augmentera les écarts entre les utilisateurs contactés. L'écart de confiance Deltaconf sera alors élevé et un tel utilisateur 1 devra être écarté.

A l'issue de ce traitement, l'application client récepteur fournit au module d'interface 201 une aide à la décision sous la forme d'une information Information-Client. Cette information indique à l'utilisateur 2 s'il peut ou s'il ne peut pas accepter la requête de communication Req$_{com}$ émanant de l'utilisateur 1.

L'utilisateur 2 indique son choix (ChoixConfirmation sur la figure 11) à l'application client récepteur via le module d'interface 201. Si la communication avec l'utilisateur 1 est acceptée (confirmation OK sur la figure 11), une notification d'acceptation de la requête Req$_{com}$ (Acceptation sur la figure 11) est envoyée à l'application client émetteur. A l'inverse, si la communication avec l'utilisateur 1 est refusée (confirmation Non Ok sur la figure 11), une notification de refus de la requête Req$_{com}$ (Rejet sur la figure 11) est envoyée à l'application client émetteur.

On notera que le dispositif de supervision S met à jour la base de communications 302 en fonction de la décision de l'utilisateur 2.

Le dispositif d'aide à la décision 30 utilisé dans le procédé de la figure 12 se distingue en ce qu'il possède un serveur applicatif supplémentaire. Ce serveur applicatif est adapté pour traiter directement le score de confiance Sconf et l'écart de confiance Deltaconf déterminés par le dispositif de calcul 301. Un tel traitement n'est plus ainsi réalisé au sein du terminal récepteur 20 comme dans le mode de réalisation de la figure 11.

Le procédé de la figure 12 comprend la transmission d'un ordre Ordre par l'utilisateur 1 via le module d'interface 101 du terminal 10 à l'application client émetteur de ce même terminal 10. A la réception de cet ordre, l'application client émetteur transmet une requête de communication Req$_{com}$ au serveur applicatif du dispositif 30. Cette requête comprend l'identifiant ID_1 de l'utilisateur 1. Le serveur applicatif transmet au dispositif de calcul 301 une demande getScore de détermination d'un score de confiance Sconf de l'utilisateur 1 et d'un écart de confiance Deltaconf. Cette demande getScore comprend l'identifiant ID_1 de l'utilisateur 1. En retour, le dispositif de calcul 301 fournit au serveur applicatif le score de confiance Sconf de l'utilisateur 1 et l'écart de confiance Deltaconf. Le dispositif de calcul 301 détermine ces données Data en consultant la base de communications 302. Le score de confiance Sconf et l'écart de confiance Deltaconf peuvent être déterminés par les différentes méthodes exposées précédemment.

Le serveur applicatif est apte à traiter le score de confiance Sconf et l'écart de confiance Deltaconf et à fournir une aide à la décision à l'application client récepteur par la transmission de ces données Data à cette application. L'application client récepteur adapte l'information client au module d'interface 201. L'information client indique à l'utilisateur 2 s'il peut ou s'il ne peut pas accepter la requête de communication Req$_{com}$ émanant de l'utilisateur 1. L'utilisateur 2 indique son choix (Choix-Confirmation sur la figure 12) à l'application client récepteur, via le module d'interface 201. Si la communication avec l'utilisateur 1 est acceptée, une notification d'acceptation (Acceptation sur la figure 12) est envoyée à l'application client émetteur. A l'inverse, si la communication avec l'utilisateur émetteur est refusée, une notification de refus (Rejet sur la figure 12) est envoyée à l'application client émetteur.

L'aide à la décision peut être ainsi appliquée à différents cas d'utilisation.

Un premier cas d'utilisation de l'invention se situe dans le « mobile banking/SMShing ». Les utilisateurs d'applications de « mobile banking » sont souvent victimes de tentatives d'arnaques visant à détourner tout ou partie des fonds vers un ou plusieurs comptes frauduleux de manière plus ou moins astucieuse. Les tentatives de fraude ou d'arnaque sont nombreuses et variées mais se calquent souvent sur un scénario classique : un fraudeur/arnaqueur achète une carte SIM temporaire et procède pendant un temps limité à une campagne d'hameçonnage. Il envoie des SMS (ou des appels) à un grand nombre d'utilisateurs désignés au hasard choisis parmi des listes clients provenant de fuite de données de site web marchand (par exemple) ou s'échangent/s'achètent des listes de numéros de téléphone de cibles potentielles. Le contenu du message (gain à un jeu, connaissance en détresse...) incite l'utilisateur victime à initialiser une transaction vers un compte qu'il pensera être « légitime » mais en réalité associé au fraudeur. Le compte servira à recueillir une partie des fonds de la campagne de fraude puis sera clôturé après avoir été vidé. Les nombreuses victimes ciblées par cette campagne ne se connaissent pas et n'ont pas de liens « sociaux » forts entre elles. De plus, ces victimes sont installées dans le système (présentes sur des listes vendues ou échangées). La probabilité que x victimes choisies au hasard par l'algorithme parmi N (sur les listes) puissent avoir une distance sociale communautaire calculable (et courte) est faible, voire quasi nulle. Le comportement abusif du fraudeur est donc qualifiable et quantifiable rapidement (à partir de quelques transactions) et peut être présenté aux victimes dès les premiers échanges à la réception de l'appel ou du SMS (pour « Short Message System » en anglais), ou à l'envoi de la transaction.

Un second cas d'utilisation se situe dans la « communication/démarchage ».

Lors d'une campagne de démarchage téléphonique, les entreprises utilisent plusieurs numéros d'appel très souvent renouvelés. Certaines applications de l'art antérieur proposent aux victimes de démarchage d'identifier et de qualifier le type de démarchage (commercial, malveillant) de manière collaborative et propose une solution de partage de cette information via l'application. Il peut se passer quelques heures/jours avant que le service ne devienne pleinement efficace (suffisamment de remontées) et laisse le temps aux entreprises de modifier leur numéro d'appel. Sur le même principe que décrit pour le premier cas, les démarcheurs exploitent des listes de numéros à appeler, les « victimes » présentes sur ces listes n'ont a priori aucun lien entre-elles et donc une probabilité faible (voire quasi nulle), la distance sociale moyenne est très élevée (avec des distances infinies).

Un troisième cas d'application se situe dans la gestion de « courriel escroquerie/pourriel ». Lorsqu'un utilisateur d'un service de courriel reçoit une communication entrante (un courriel) d'un émetteur « inconnu », l'invention permet de calculer un a priori d'utilisation abusive de l'émetteur du courriel, tel que des émetteurs d'escroquerie ou de pourriel. Le dispositif de calcul 301 peut alors exploiter ce score afin de classer les courriels, voire les rejeter, de façon optimisée : les émetteurs ayant un score élevé seront a priori des émetteurs de pourriels, les émetteurs ayant un score moyen seront des émetteurs entreprise/institutionnel, et les émetteurs ayant de faible score seront des particuliers. L'utilisateur récepteur peut alors contacter le dispositif de calcul 301 afin de consulter ces différents courriels, mettant en avant les courriels d'utilisateurs légitimes, et filtrant les pourriels et courriels d'escroqueries.

La solution proposée par l'invention est également applicable à tout contexte mettant en oeuvre des transactions, entrantes ou sortantes, pour lesquelles il est possible d'établir une relation sociale entre les acteurs du système : paiements mobiles, virements bancaires, communication (courriels, appels, sms, CDR (pour « Call Detail Record » en anglais), ...)

L'invention permet un affichage en temps réel du niveau de confiance de chaque transaction entrante au niveau du terminal 20.

L'invention proposée est complémentaire des solutions décrites dans l'art antérieur et en renforce l'efficacité.

La solution proposée repose ainsi sur l'utilisation d'une brique logicielle de contrôle et de sécurisation des transactions.

L'invention repose, dans un mode de réalisation particulier, sur une pratique de « scorer » une distance sociale moyenne entre les contacts d'un utilisateur émetteur d'une requête de communication, pour en extraire un score de confiance évaluant son intégration/son usage vertueux du service de communication. Ce score de confiance est un critère d'évaluation, pour chaque émetteur de transactions, de sa prédisposition à diffuser de l'information personnelle/pertinente/générique ou au contraire nuisible vers ses interlocuteurs.

Sur la base d'une brique technique qui permet de construire des ensembles d'utilisateurs identifiés comme présentant une proximité sociale transactionnelle calculée sur la base des échanges passés, l'ensemble des utilisateurs, et de leurs transactions passées, constituent un réseau, dont chaque noeud est un utilisateur, et les données transactionnelles passées permettent de créer une relation entre les noeuds du réseau.

Le système proposé attribue à chaque utilisateur une ou plusieurs communautés d'appartenance.

Le système stocke, pour chaque utilisateur, l'ensemble de ses communautés d'appartenance calculé et le maintien à jour par une procédure automatisée appliquée régulièrement (1 fois par jour/mois/semaine).

A ces informations, s'ajoute l'écart de confiance calculé par le procédé de l'invention. Cet écart de confiance est calculé, dans un mode de réalisation, à partir de distances intercommunautaires minimales. Dans un autre mode de réalisation, l'écart de confiance est déterminé à partir d'une cardinalité d'une union de communautés d'utilisateurs.

## Revendications

1. Procédé d'aide à la décision pour un utilisateur (2) d'un premier terminal (20) recevant une requête de communication ($Req_{com}$) provenant d'un deuxième terminal (10), l'utilisateur (1) du deuxième terminal (10) n'ayant pas encore transmis de requête de communication à l'utilisateur du premier terminal (20), ledit procédé comprenant :

   - une détermination d'un score de confiance (Sconf) de l'utilisateur du deuxième terminal (10) et d'un écart de confiance (Deltaconf), ledit écart de confiance (Deltaconf) apportant une information sur une fiabilité dudit score de confiance (Sconf), ledit score de confiance (Sconf) et ledit écart de confiance (Deltaconf) étant déterminés à partir d'une liste (h) comprenant au moins un utilisateur ($3_1$, $3_4$, $3_7$) d'un troisième terminal auquel le deuxième terminal (10) a déjà transmis une requête de communication, le au moins un utilisateur ($3_1$, $3_4$, $3_7$) du troisième terminal appartenant à au moins une communauté ($C_1$, $C_2$, $C_4$) d'utilisateurs.

2. Procédé d'aide à la décision selon la revendication 1, dans lequel la liste (h) comprend trois utilisateurs ($3_1$, $3_4$, $3_7$) de respectivement trois terminaux auxquels le deuxième terminal (10) a déjà transmis une requête de communication.

3. Procédé d'aide à la décision selon l'une des revendications 1 ou 2, dans lequel la détermination du score de confiance (Sconf) et de l'écart de confiance (Deltaconf) comprend une sélection d'au moins une paire ([$3_1$, $3_4$], [$3_1$, $3_7$], [$3_4$, $3_7$]) d'utilisateurs dans ladite liste (h).

4. Procédé d'aide à la décision selon la revendication 3, dans lequel la détermination du score de confiance (Sconf) comprend, pour chaque paire ([$3_1$, $3_4$], [$3_1$, $3_7$], [$3_4$, $3_7$]) d'utilisateurs, un calcul d'une distance intercommunautaire minimale (D[$3_1$, $3_4$], D[$3_1$, $3_7$], D[$3_4$, $3_7$]), ladite distance intercommunautaire minimale étant déterminée à partir d'ensembles de communauté ($C_1$, $C_2$, $C_4$) auxquels appartiennent les utilisateurs de ladite paire, ledit score de confiance correspondant à une moyenne des distances intercommunautaires minimales (D[$3_1$, $3_4$], D

$[3_1, 3_7]$, $D[3_4, 3_7])$ des paires $([3_1, 3_4]$, $[3_1, 3_7]$, $[3_4, 3_7])$.

5. Procédé d'aide à la décision selon la revendication 4, dans lequel si les utilisateurs d'une paire ont une communauté en commun, la distance intercommunautaire minimale de ladite paire est nulle.

6. Procédé d'aide à la décision selon l'une quelconque des revendications 4 ou 5, dans lequel si les utilisateurs d'une paire n'ont pas de communauté en commun, la distance intercommunautaire minimale de ladite paire est au moins égale à 1.

7. Procédé d'aide à la décision selon l'une quelconque des revendications 4 à 6, dans lequel l'écart de confiance (Deltaconf) correspond à un écart-type des distances intercommunautaires minimales $(D[3_1, 3_4]$, $D[3_1, 3_7]$, $D[3_4, 3_7])$ des paires $([3_1, 3_4]$, $[3_1, 3_7]$, $[3_4, 3_7])$.

8. Procédé d'aide à la décision selon la revendication 2, dans lequel le score de confiance (Sconf) correspond à une cardinalité d'une union de communautés d'utilisateurs auxquelles les trois utilisateurs de la liste (h) appartiennent.

9. Procédé d'aide à la décision selon la revendication 8, dans lequel l'écart de confiance (Deltaconf) correspond au score de confiance (Sconf) auquel on soustrait une moyenne de cardinalités d'unions des communautés d'utilisateurs auxquelles les trois utilisateurs de la liste (h) appartiennent.

10. Système d'aide à la décision pour un utilisateur (2) d'un premier terminal (20) recevant une requête de communication $(Req_{com})$ provenant d'un deuxième terminal (10), l'utilisateur (1) du deuxième terminal (10) n'ayant pas encore transmis de requête de communication à l'utilisateur (2) du premier terminal (20), ledit système d'aide à la décision (30) comprenant un dispositif de calcul (301) et une base de communications (302), ledit dispositif de calcul (301) et ladite base de communications (302) étant aptes à déterminer un score de confiance (Sconf) de l'utilisateur (1) du deuxième terminal (10) et un écart de confiance (Deltaconf), ledit écart de confiance (Deltaconf) apportant une information sur une fiabilité dudit score de confiance (Sconf), ledit score de confiance (Sconf) et ledit écart de confiance (Deltaconf) étant déterminés à partir d'une liste (h) comprenant au moins un utilisateur $(3_1, 3_4, 3_7)$ d'un troisième terminal auquel le deuxième terminal (10) a déjà transmis une requête de communication, le au moins un utilisateur $(3_1, 3_4, 3_7)$ du troisième terminal appartenant à au moins une communauté $(C_1, C_2, C_4)$ d'utilisateurs.

11. Système d'aide à la décision selon la revendication 10, dans lequel le dispositif de calcul (301) est adapté pour transmettre le score de confiance (Sconf) et l'écart de confiance (Deltaconf) au premier terminal (20).

12. Système d'aide à la décision selon la revendication 11, dans lequel ledit système comprend un serveur applicatif, ledit serveur applicatif étant apte à traiter ledit score de confiance (Sconf) et ledit écart de confiance (Deltaconf) et à envoyer le résultat dudit traitement au premier terminal (20).

13. Programme d'ordinateur comprenant des instructions de code de programme pour l'exécution des étapes d'un procédé d'aide à la décision selon l'une quelconque des revendications 1 à 9, lorsque ledit programme est exécuté par un processeur.

14. Support d'enregistrement lisible par un ordinateur sur lequel est enregistré un programme d'ordinateur comprenant des instructions de code de programme pour l'exécution d'un procédé d'aide à la décision selon l'une quelconque des revendications 1 à 9, lorsque ledit programme est exécuté par un processeur.

[Fig. 1]

[Fig. 2]

10

101

Application client
émetteur

[Fig. 3]

| Emetteur | Récepteur | Transaction |
|---|---|---|
| $ID\_3_1$ | $ID\_3_2$ | OK |
| $ID\_3_1$ | $ID\_3_4$ | OK |
| $ID\_3_1$ | $ID\_3_5$ | OK |
| $ID\_3_2$ | $ID\_3_5$ | OK |
| $ID\_3_2$ | $ID\_3_6$ | OK |
| $ID\_3_3$ | $ID\_3_4$ | OK |
| $ID\_3_3$ | $ID\_3_7$ | OK |
| $ID\_3_3$ | $ID\_3_8$ | OK |
| $ID\_3_4$ | $ID\_3_7$ | OK |
| $ID\_3_5$ | $ID\_3_6$ | OK |
| $ID\_3_5$ | $ID\_3_{12}$ | OK |
| $ID\_3_5$ | $ID\_3_{14}$ | OK |
| $ID\_3_7$ | $ID\_3_8$ | OK |
| $ID\_3_7$ | $ID\_3_{12}$ | OK |

H

| Emetteur | Récepteur | Transaction |
|---|---|---|
| $ID\_3_8$ | $ID\_3_9$ | OK |
| $ID\_3_8$ | $ID\_3_{11}$ | OK |
| $ID\_3_9$ | $ID\_3_{10}$ | OK |
| $ID\_3_9$ | $ID\_3_{11}$ | OK |
| $ID\_3_9$ | $ID\_3_{12}$ | OK |
| $ID\_3_9$ | $ID\_3_{13}$ | OK |
| $ID\_3_{10}$ | $ID\_3_{11}$ | OK |
| $ID\_3_{12}$ | $ID\_3_{13}$ | OK |
| $ID\_3_{12}$ | $ID\_3_{14}$ | OK |
| $ID\_3_{12}$ | $ID\_3_{15}$ | OK |
| $ID\_3_{13}$ | $ID\_3_{15}$ | OK |
| $ID\_3_{14}$ | $ID\_3_{15}$ | OK |
| $ID\_1$ | $ID\_3_1$ | NOK |
| $ID\_1$ | $ID\_3_4$ | NOK |
| $ID\_1$ | $ID\_3_7$ | NOK |

h

[Fig. 4]

[Fig. 5]

| Utilisateurs | Communautés |
|:---:|:---:|
| $ID\_3_1$ | $C_1$ |
| $ID\_3_2$ | $C_1$ |
| $ID\_3_3$ | $C_2$ |
| $ID\_3_4$ | $C_1, C_2$ |
| $ID\_3_5$ | $C_1, C_4$ |
| $ID\_3_6$ | $C_1$ |
| $ID\_3_7$ | $C_2, C_4$ |
| $ID\_3_8$ | $C_2, C_3$ |
| $ID\_3_9$ | $C_3, C_4$ |
| $ID\_3_{10}$ | $C_3$ |
| $ID\_3_{11}$ | $C_3$ |
| $ID\_3_{12}$ | $C_4$ |
| $ID\_3_{13}$ | $C_4$ |
| $ID\_3_{14}$ | $C_4$ |
| $ID\_3_{15}$ | $C_4$ |
| $ID\_1$ | - |

T

[Fig. 6]

[Fig. 7]

[Fig. 8]

|       | $C_1$ | $C_2$ | $C_3$ | $C_4$ |
|-------|-------|-------|-------|-------|
| $C_1$ | 0     | 1     | 2     | 1     |
| $C_2$ | 1     | 0     | 1     | 1     |
| $C_3$ | 2     | 1     | 0     | 1     |
| $C_4$ | 1     | 1     | 1     | 0     |

M

[Fig. 9]

| Utilisateurs | Communautés k=0 | Communautés k=1 | Communautés k=2 |
|---|---|---|---|
| $ID\_3_1$ | $C_1$ | $C_2, C_4$ | $C_3$ |
| $ID\_3_2$ | $C_1$ | $C_2, C_4$ | $C_3$ |
| $ID\_3_3$ | $C_2$ | $C_1, C_3, C_4$ | - |
| $ID\_3_4$ | $C_1, C_2$ | $C_3, C_4$ | - |
| $ID\_3_5$ | $C_1, C_4$ | $C_2, C_3$ | - |
| $ID\_3_6$ | $C_1$ | $C_2, C_4$ | $C_3$ |
| $ID\_3_7$ | $C_2, C_4$ | $C_1, C_3$ | - |
| $ID\_3_8$ | $C_2, C_3$ | $C_1, C_3, C_4$ | - |
| $ID\_3_9$ | $C_3, C_4$ | $C_1, C_2$ | - |
| $ID\_3_{10}$ | $C_3$ | $C_2, C_4$ | $C_1$ |
| $ID\_3_{11}$ | $C_3$ | $C_2, C_4$ | $C_1$ |
| $ID\_3_{12}$ | $C_4$ | $C_1, C_2, C_3$ | - |
| $ID\_3_{13}$ | $C_4$ | $C_1, C_2, C_3$ | - |
| $ID\_3_{14}$ | $C_4$ | $C_1, C_2, C_3$ | - |
| $ID\_3_{15}$ | $C_4$ | $C_1, C_2, C_3$ | - |
| $ID\_1$ | - | - | - |

T'

[Fig. 10]

**20**

**201**

↕

**Application client destinataire**

[Fig. 11]

[Fig. 12]

[Fig. 13]

30

301

302

MEM    PROC    COM

PROG

Europäisches
Patentamt

European
Patent Office

Office européen
des brevets

# RAPPORT DE RECHERCHE EUROPEENNE

Numéro de la demande

EP 24 18 7836

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 512 232 A1 (FACEBOOK INC [US]) 17 juillet 2019 (2019-07-17) | 1-3, 10-14 | INV. H04L9/40 |
| Y | * alinéa [0001] - alinéa [0027] * | 4-9 | G06Q20/40 |
| | * alinéa [0032] - alinéa [0033] * | | H04W12/08 |
| | * alinéa [0038] - alinéa [0040] * | | G06F21/40 |
| | * alinéa [0042] - alinéa [0044] * | | |
| | * alinéa [0054] - alinéa [0069] * | | |
| | ----- | | |
| X | FR 3 126 582 A1 (ORANGE [FR]) 3 mars 2023 (2023-03-03) | 1-3, 10-14 | |
| Y | * le document en entier * | 4-9 | |
| | ----- | | |
| Y | US 2013/291098 A1 (CHUNG SEONG TAEK [US] ET AL) 31 octobre 2013 (2013-10-31) * alinéa [0002] * * alinéa [0025] - alinéa [0059]; figure 5 * | 4-9 | |
| | ----- | | |
| A | EP 3 044 696 B1 (WAVE SYS CORP [US]) 21 octobre 2020 (2020-10-21) * le document en entier * | 1-14 | |
| | ----- | | |

**DOMAINES TECHNIQUES RECHERCHES (IPC)**

H04L
G07G
G06Q
H04W
G06F

Le présent rapport a été établi pour toutes les revendications

| Lieu de la recherche | Date d'achèvement de la recherche | Examinateur |
|---|---|---|
| Munich | 22 novembre 2024 | Yanai, Yoav |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 18 7836

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-11-2024

| Document brevet cité au rapport de recherche | | | Date de publication | Membre(s) de la famille de brevet(s) | | | Date de publication |
|---|---|---|---|---|---|---|---|
| EP | 3512232 | A1 | 17-07-2019 | AUCUN | | | |
| FR | 3126582 | A1 | 03-03-2023 | AUCUN | | | |
| US | 2013291098 | A1 | 31-10-2013 | US | 2013291098 | A1 | 31-10-2013 |
| | | | | WO | 2013165636 | A1 | 07-11-2013 |
| EP | 3044696 | B1 | 21-10-2020 | EP | 3044696 | A2 | 20-07-2016 |
| | | | | US | 2015089568 | A1 | 26-03-2015 |
| | | | | US | 2016330178 | A1 | 10-11-2016 |
| | | | | US | 2020244633 | A1 | 30-07-2020 |
| | | | | US | 2022021664 | A1 | 20-01-2022 |
| | | | | US | 2024372842 | A1 | 07-11-2024 |
| | | | | WO | 2015047992 | A2 | 02-04-2015 |

EPO FORM P0460

Pour tout renseignement concernant cette annexe : voir Journal Officiel de l'Office européen des brevets, No.12/82